# EUROPEAN PATENT SPECIFICATION

(11) **EP 0 765 435 B1**
(45) Date of publication and mention of the grant of the patent: **18.08.1999**
(21) Application number: 96906984.8
(22) Date of filing: 06.03.1996
(51) Int. Cl.: F02B 37/007, F02B 37/12

(54) **METHOD AND ARRANGEMENT FOR CONTROLLED SUPERCHARGING OF A MULTI-CYLINDER COMBUSTION ENGINE**
VERFAHREN UND ANORDNUNG ZUM GESTEUERTEN AUFLADEN EINES MEHRZYLINDERVERBRENNUNGSMOTORS
PROCEDE ET DISPOSITIF POUR UNE SURALIMENTATION REGULEE D'UN MOTEUR A COMBUSTION A PLUSIEURS CYLINDRES

(30) Priority: 10.03.1995 SE 9500855
(43) Date of publication of application: 02.04.1997
(73) Proprietor: Scania CV AKTIEBOLAG, 151 87 Södertälje (SE)
(72) Inventor: LARSSON, Jan-Olof, S-619 00 Trosa (SE)
(74) Representative: Waldebäck, Hans Olov
(86) International application number: SE9600294
(87) International publication number: WO9628648

(56) References cited:
- DE-C- 4 229 722
- PATENT ABSTRACTS OF JAPAN, Vol. 10, No. 73, M-463; & JP,A,60 216 030 (HONDA GIKEN KOGYO K.K.), 29 October 1985.

## Description

The present invention relates to a method for control of the supercharging of a multi-cylinder combustion engine in accordance with what is indicated in more detail in the preamble to patent claim 1, and an arrangement for implementation of that method in accordance with what is indicated in more detail in the preamble to patent claim 5.

### State of the art

Numerous arrangements for control of the supercharging of a combustion engine are known. For example, there are systems whereby the exhaust flow from the combustion engine either in a first operating state may pass through an exhaust turbine driven by the whole exhaust flow or in a second operating state may alternatively be divided into parallel flows which pass through two parallel exhaust turbines. The exhaust turbine or turbines drives or drive a compressor or compressors, thereby making it possible to control the supercharging of the combustion engine. Running the whole exhaust flow through only one exhaust turbine improves the response of this supercharging unit mainly at low speeds and low exhaust flows, whereas higher maximum supercharging may be obtained if two parallel supercharging units are used at higher speeds and exhaust flows. Also known is the use of a common bypass control for two separate exhaust flows which drive separate exhaust turbines.

It is also known for the inlet system of the combustion engine to be divided into two separate air distribution systems which are for different groups of cylinders and are supercharged by separate supercharging units each driven by an exhaust turbine receiving the exhaust flow from the respective group of cylinders.

It is also known for combustion engines with only one supercharging unit, whereby the exhaust flow to the inlet volute of the supercharging unit is divided into two separate flows, to be provided with a control arrangement whereby only one exhaust flow is made to bypass the turbine. These systems function satisfactorily and affect the scavenging of the cylinders to only a slight extent.

### Objects of the invention

The invention has the object of providing simpler and less expensive control of the supercharging in a multi-cylinder combustion engine by means of two exhaust-driven turbochargers.

Another object is to increase operational reliability by minimising the number of controlling units and servos exposed to risks of breakdown.

A further object is in the case of V-engines to limit the exhaust pipe run and maintain the possibility of splitting the exhaust flow into at least two flows from different groups of cylinders so that exhaust pulses which occur in the exhaust manifold from one group of cylinders do not disturb the scavenging of a cylinder in the other group of cylinders.

Yet a further object is by means of a simple supercharging arrangement to obtain good response at low speeds and loads as well as good performance at high speeds and loads.

### Brief description of the invention

The method according to the invention is distinguished by the characterising part of patent claim 1, and the arrangement for implementing the method according to the invention is distinguished by the characterising part of patent claim 5.

The method and arrangement according to the invention provide a supercharging arrangement which is simple to control and to install on combustion engines, is cost-effective and has high reliability with few moving parts and which can provide at least limited supercharging for a "limp home" function should one supercharging unit fail. They also provide good response and performance in both the low speed/low load range and in the high speed/high load range.

Other features and advantages distinguishing the invention are indicated in the characterising parts of the other patent claims and in the following description of exemplifying embodiments, which are described with reference to the drawings listed below.

### List of drawings

Fig.1 depicts schematically an arrangement for supercharging of a multi-cylinder combustion engine which takes the form of an in-line engine, and
Fig.2 depicts schematically an alternative arrangement for supercharging of a multi-cylinder combustion engine which takes the form of a V-engine.

### Description of embodiments

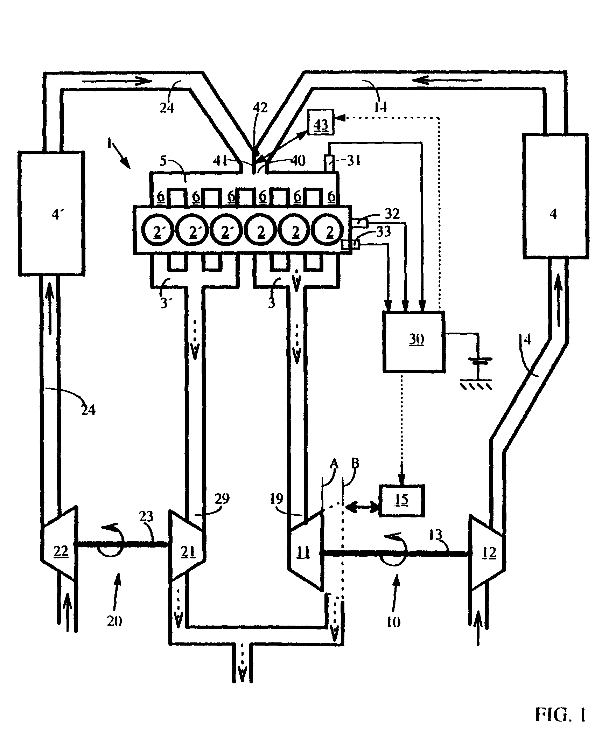

Fig.1 shows a first embodiment of the invention with a multi-cylinder combustion engine 1 in which all of the cylinders 2,2' are arranged in rows. The cylinders are divided into a first cylinder group with the cylinders 2 and a second cylinder group with the cylinders 2'. The exhaust gases from the respective cylinder groups are gathered into respective separate exhaust manifolds 3 and 3'. The first exhaust manifold 3 leads the exhaust gases from the first cylinder group to a first supercharger unit 10 which incorporates a first turbine 11 driven by the exhaust gases. The turbine 11 is fastened for rotation on a drive shaft 13 on which a compressor 12 is also fastened for rotation so that the first turbine drives the first compressor via the drive shaft 13. The second exhaust manifold 3' correspondingly leads the exhaust gases from the second cylinder group to a second supercharger unit 20 which incorporates a second turbine 21 driven by the exhaust gases. The turbine 21 is fastened for rotation on a drive shaft 23 on which a second compressor 22 is also fastened for rotation so that the second turbine drives the second compressor via the drive shaft 23.

After the exhaust gases have passed through the turbines 11 and 21, as depicted in Fig.1, they are brought together in a common exhaust pipe. Alternatively the exhaust gases may be kept separate throughout the exhaust system or only brought together after other types of exhaust treatment equipment such as silencers, catalysts or other types of exhaust cleaning equipment.

Other arrangement may be used, for example, in compound engines in which an additional exhaust turbine is placed after the supercharging units 10,20 to receive the exhaust flow which has already passed through the turbines 11,21 of the superchargers, in which compound engines the additional turbine is used for extracting further energy from the exhaust gases either in order to drive a generator or in order, via a mechanical transmission, to impart driving torque to the crankshaft of the combustion engine. In such compound engines the exhaust gases may be kept separate right up to the inlet volute of the compound turbine, i.e. the exhaust gases from the different cylinder groups are only brought together in the blades of the compound turbine.

In the embodiment depicted in Fig.1, the air distribution pipe 5 of the combustion engine is supplied by both the compressors 12,22. Before the compressed air reaches the air distribution pipe 5 a charge air cooler 4,4' is preferably arranged to cool the air heated by the compression. Fig.1 shows two separate charge air coolers 4 and 4' which act on the air flow from the first compressor 12 and the second compressor 22 respectively. The air distribution pipe 5 is the gathering volume from which individual inlet air ducts 6 connect to the inlet valves of each cylinder.

The flow of compressed (and preferably cooled) air is brought together at a junction point 40 situated immediately upstream (as seen in the inlet air flow direction) from the air distribution pipe 5.

According to the invention, only the first turbine 11 is adjustable, while the second turbine 21 is a fixed-geometry turbine which has continuously flowing through it mostly the whole exhaust flow from the second cylinder group. The whole exhaust flow means the whole exhaust flow apart from any partial exhaust flow which is led back to the inlet side of the combustion engine by means of a suitable arrangement (not depicted) known as EGR. Thus all the exhaust gases from the second cylinder group pass through the turbine 21 and have to be led into and treated in the exhaust system, which possibly incorporates exhaust cleaning equipment, before these exhaust gases leave the combustion engine. In Fig.1 the first turbine is a variable-geometry turbine whose geometry may be varied by a control device 15.

Variable-geometry turbines are turbines in which, for example, the inlet vanes are settable so as to be able to control where the exhaust flow is fed into the exhaust turbine impeller, but also turbines in which the angular position of the blades may be adjusted, or other control methods whereby the components of the exhaust turbine may be acted upon in order to adjust and adapt the volumetric expansion work of the exhaust gases in the turbine casing in order thereby to control the energy extracted from the exhaust gases.

The adjustment of the first exhaust turbine 11 is controlled by a preferably electronic control unit 30 which, via sensors 31, 32, 33 respectively detects various engine parameters such as the charge air pressure in the air distribution pipe, the speed of the combustion engine and the temperature, preferably the cooling water temperature of the combustion engine. The control unit has programmes stored in it for how the charge air pressure is controlled and adjusted on the basis of the motor parameters detected.

As the cylinder groups have a common air distribution pipe 5, the uncontrolled second turbine 21 will be slave-controlled on the basis of the controlled pressure prevailing in the air distribution pipe 5, which pressure determines the air quantity which is fed into the respective cylinders and which after combustion in the cylinders is subsequently expelled on the exhaust side.

The turbine 21 of the second supercharging unit may therefore be designed and adapted to the high-speed and high-load range, thereby obtaining optimum supercharging at these high speeds and loads. Such a second turbine 21 optimised with respect to the high-speed/high-load range has the disadvantage, however, of exhibiting inferior response at low speeds and loads. As the first turbine 11 differs in that it has variable geometry, it may be temporarily adapted to the conditions prevailing during low speeds/loads and, by acting on its geometry, be made "smaller" so as to adapt to the lower exhaust flows and thus achieve an improved response. Supercharging of the combustion engine may thus be achieved at low cost but with maintained characteristics with regard to good response and high supercharging at low speeds and loads and at high speeds and loads respectively.

Variable-geometry supercharging units are substantially more expensive than uncontrolled fixed supercharging units with constant geometry. Increased operational reliability is also obtained in that the second fixed supercharging unit 20 is not as exposed to risk of breakdown as a variable-geometry supercharger unit, which means that a certain amount of supercharging may nevertheless be maintained should the variable-geometry supercharger unit break down.

With a view to improving the system and preventing compressed air at higher pressure from the controlled supercharger unit flowing back up through the air lines to the compressor 22 of the uncontrolled supercharger unit, various flow-influencing devices may be incorporated at the junction point 40. In Fig.1 there is an adjustable throttle 41 at the junction point 40. This throttle may be rotated about a pivot 42 so that it "feathers" in the flow and can be adjusted by the control unit 30 by means of a control device 43 in parallel with the adjustment of the turbine 11. In an alternative variant the throttle may be controlled on the basis of the pressure difference between the air ducts 14 and 24.

In an undepicted variant the air ducts 14,24 which convey air at the lower pressure may connect at a junction point which takes the form of an ejector so that the air flow at any controlled higher pressure will entrain with it the air flow at the lower pressure. Another alternative is to make the air ducts 14,24 connect to the air distribution pipe 5 as far from one another as possible, e.g. at opposite ends of the air distribution pipe 5. Thus the air which is conveyed in the air duct 14 or 24, which has a relatively higher pressure, will expand out into the air distribution pipe and reduce its relatively higher pressure.

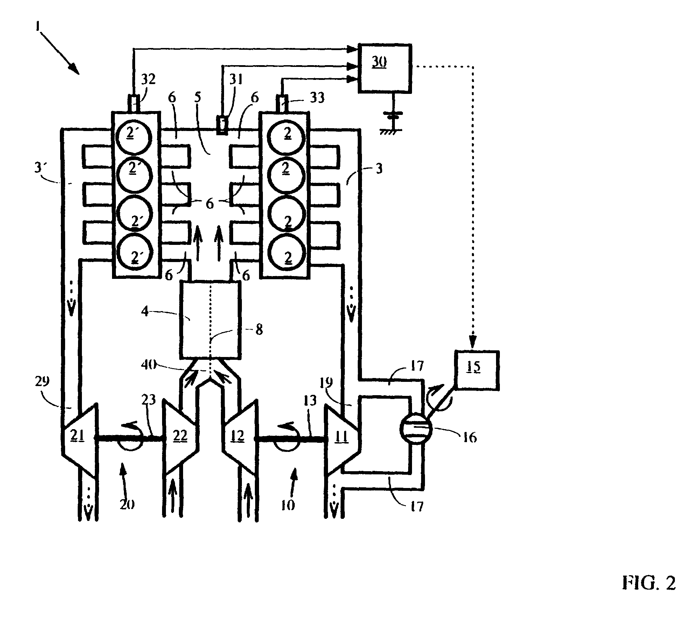

Fig.2 depicts a second embodiment of the invention in which components corresponding to Fig.1 have the same reference notations. In this case the invention is implemented on a multi-cylinder combustion engine 1 in which the cylinders 2,2' are arranged in two banks of cylinders, preferably a V-engine in which the banks of cylinders are set at an angle to 5 one another. The cylinders are divided into a first cylinder bank hereinafter called the first cylinder group with the cylinders 2, and a second cylinder bank hereinafter called the second cylinder group with the cylinders 2'. As in Fig.1, the exhaust gases from the respective cylinder groups are gathered into separate exhaust manifolds 3,3'. The first exhaust manifold 3 leads the exhaust gases from the first cylinder group to a first supercharger unit 10 which incorporates a first turbine 11 driven by the exhaust gases. The turbine 11 is fastened for rotation on a drive shaft 13 on which a compressor 12 is also fastened for rotation so that the first turbine drives the first compressor via the drive shaft 13.

The second exhaust manifold 3' correspondingly leads the exhaust gases from the second cylinder group to a second supercharger unit 20 which incorporates a second turbine 21 driven by the exhaust gases. The turbine 21 is fastened for rotation on a drive shaft 23 on which a second compressor 22 is also fastened for rotation so that the second turbine drives the second compressor via the drive shaft 23.

With the invention implemented on a V-engine with rows of cylinder groups set at an angle to one another, the exhaust pipe run and the inlet air pipe/air distribution pipe may be situated in an optimum manner so that the common air distribution pipe 5 is situated between the cylinder groups and that the exhaust manifolds for the respective cylinder groups are situated externally relative to the cylinder groups arranged in a "V" formation. The exhaust turbine for each row of cylinders may then be placed close to its exhaust manifold at the end of the respective row of cylinders, while the respective compressors may be placed internally about the turbines for feeding compressed combustion air to the common air distribution pipe 5, possibly via feed lines which run to a charge air cooler possibly situated at the opposite end of the rows of cylinders.

After the exhaust gases have passed through the turbines 11 and 21, they are brought together in a common exhaust pipe, as shown in Fig.1, or are kept separate throughout the exhaust system or brought together only after other types of exhaust treatment equipment such as silencers, catalysts or other types of exhaust cleaning equipment.

In the embodiment depicted in Fig.2, the air distribution pipe 5 of the combustion engine is supplied by both the compressors 12,22. Before the compressed air reaches the air distribution pipe 5, preferably one charge air cooler 4 is arranged to cool the air heated by the compression. Fig.2 shows a charge air cooler which acts on the combined air flow from the first compressor 12 and the second compressor 22.

The compressed air flow is brought together at a junction point 40 which in Fig.2 is situated immediately upstream from the charge air cooler 4, as seen in the inlet flow direction.

According to the invention, only the first turbine 11 is adjustable, while the second turbine 21 is a fixed-geometry turbine which has continuously flowing through it mostly the whole exhaust flow from the second cylinder group. In Fig.2 the first turbine has a bypass duct 17 bypassing the first turbine 11. The bypass duct 17 incorporates a control valve 16, the degree of opening of which may be varied in a conventional manner by a control device 15. The control valve 16 may either be controlled by pulse width modulation or by proportional opening of the control valve 16. Pulse width modulation is a form of control whereby the control valve during a specified control period closes from the fully open to the fully closed position but the proportions or pulse widths of the opening time activated during the period may be controlled. The proportion of the exhaust gases from the first exhaust manifold 3 which is led past the first turbine 11 may thus be controlled and may hence also be inversely proportional to the energy extracted from the exhaust gases for driving the turbine 11.

The position of the control valve 16 of the first exhaust turbine 11 is controlled by a preferably electronic control unit 30 which via sensors 31, 32, 33 detects various engine parameters such as the charge air pressure in the air distribution pipe, the speed of the combustion engine and the temperature of the combustion engine. This control unit stores programmes for how the charge air pressure is controlled and adjusted on the basis of the engine parameters detected.

Since the cylinder groups have a common air distribution pipe 5, the uncontrolled second turbine 21 in Fig.2 will, in the same manner as in Fig.1, be slave-controlled on the basis of the controlled pressure prevailing in the air distribution pipe 5. The turbine 21 of the second supercharging unit may therefore be designed and adapted correspondingly as in the arrangement depicted in Fig.1. Since the first turbine 11 differs in that it has bypass control, the exhaust gas flow may be led past this turbine in varying proportions during, for example, high speeds and loads. The first turbine with bypass control may therefore be optimised for rapid response, i.e. be adapted for lower exhaust flow and hence provide an improved response. Supercharging of a combustion engine by an arrangement in accordance with Fig.2, as with the embodiment depicted in Fig.1, may thus be achieved at low cost but with maintained characteristics with regard to good response and high supercharging at low speeds and loads as well as at high speeds and loads. Supercharging units with bypass control and the associated control devices are substantially more expensive than uncontrolled supercharging units with constant geometry. Increased operational reliability is also achieved in that the second fixed supercharging unit 20 is not as exposed to risks of breakdown as a supercharger unit with bypass control, which means that a certain amount of supercharging can nevertheless be maintained should the supercharger unit with bypass control break down.

The arrangement depicted in Fig.2 may correspondingly as in Fig.1 be provided with various flow-influencing devices incorporated at the junction point 40 with the view to preventing compressed air with higher pressure flowing back up towards the compressor which supplies the lower controlled pressure, in Fig.2 the compressor 12 which is driven by the bypassable turbine 11.

The invention is not restricted to the embodiments depicted in Fig.1 or 2 but may be modified in a number of ways within the scope of the patent claims. For example, a single charge air cooler may be employed in Fig.1, but with a junction point 40 situated immediately upstream from the charge air cooler, as seen in the inlet air flow direction. Conversely, the charge air cooler in Fig.2 may be provided with a dividing wall 8 (represented by a discontinuous line in Fig.2) whereby the charge air may be kept separate through the charge air cooler and only be brought together immediately upstream from the air distribution pipe 5.

## Claims

1. Method for supercharging of a multi-cylinder combustion engine (1) whereby the cylinders (2,2') form first and second cylinder groups,
whereby the exhaust flow from the first cylinder group drives a first exhaust turbine (11) in a first supercharging unit (10) and the exhaust flow from the second cylinder group drives a second exhaust turbine (21) in a second supercharging unit (20), and
whereby each of the supercharging units (10,20) incorporates a compressor (12 or 22 respectively) which is driven by the respective exhaust turbine (11 or 21 respectively) and which supplies the inlet system of the combustion engine with combustion air at increased pressure, **characterised** in that only the exhaust flow from one cylinder group which passes through one of the exhaust turbines is controlled on the basis of relevant detected engine parameters, while the other exhaust turbine is a full-flow turbine with fixed geometry whereby substantially the whole exhaust flow from the second cylinder group in all operating states passes through the second exhaust turbine.

2. Method according to patent claim 1, **characterised** in that the exhaust flow from one cylinder group which passes through the controlled exhaust turbine is controlled on the basis of relevant detected engine parameters by adjusting the geometry of the turbine.

3. Method according to patent claim 1, **characterised** in that the exhaust flow from one cylinder group which passes through the controlled exhaust turbine is controlled on the basis of relevant detected engine parameters by it being possible for varying proportions of the flow to be led past this turbine.

4. Method according to patent claim 1, 2 or 3, **characterised** in the two cylinder groups of the combustion engine are each provided with combustion air from the compressors of both the first and second supercharging units.

5. Arrangement for supercharging of a multi-cylinder combustion engine (1) whereby the cylinders (2,2') form first and second cylinder groups, whereby the exhaust flow from the cylinders (2) of the first cylinder group is led in a first exhaust manifold (3) to a first exhaust turbine (11) in a first supercharging unit (10) in order to drive a first turbine and whereby the exhaust flow from the cylinders (2') of the second cylinder group is led in a second exhaust manifold (3'), separated from the first exhaust manifold, to a second exhaust turbine (21) in a second supercharging unit (20) in order to drive the second turbine, and whereby each of the supercharging units (10,20) incorporates a compressor (12 or 22 respectively) which is driven by the exhaust turbine and which supplies the inlet system of the combustion engine with combustion air at increased pressure, **characterised** in that the first turbine (11) incorporates a device (15,A,B / 15,16) which acts on the flow through the turbine and is controlled by a control unit (30) on the basis of sensors (31,32,33) which are associated with the control unit and detect operating states of the combustion engine, whereby the work extracted from the first turbine (11) can be adjusted in order to control the compressor (12) driven by the first turbine (11), that an inlet (29) to the second turbine (21) is connected to the exhaust manifold (3') of the second cylinder group, which exhaust manifold (3') leads substantially all the exhaust gases from the second cylinder group to the inlet (29) of the second turbine and that the second turbine (21) has a substantially constant unalterable geometry whereby the flow path of the exhaust gases from the second cylinder group and the volumetric expansion of these exhaust gases in the second turbine are maintained constant over the major part of the operating range of the combustion engine.

6. Arrangement according to patent claim 5, **characterised** in that the device (15,A,B /15,16) acting on the first turbine (11) consists of a servo device which adjusts the geometry of the first turbine and which is controlled by the control unit (30) so that the flow path of the exhaust gases through the turbine and/or their volumetric expansion may be controlled on the basis of the operating state of the combustion engine.

7. Arrangement according to patent claim 5, **characterised** in that the device (15,16) acting on the first turbine consists of a bypass duct (17) which bypasses the first turbine (11) and which incorporates a control valve (16) controlled by the control unit (30) so that the proportion of exhaust gases from the cylinders (2) of the first cylinder group which passes through the first turbine (11) or bypasses the first turbine may be controlled on the basis of the operating state of the combustion engine.

8. Arrangement according to patent claim 5, 6 or 7, **characterised** in that the air distribution pipe (5) of the combustion engine is common with the cylinders (2,2') of both cylinder groups at least at the connection to the individual air inlets (6) of the cylinders (2,2') and is supplied with compressed combustion air from the compressors (12, 22) of both the supercharging units.

9. Arrangement according to patent 8, **characterised** in that the inlet system of the combustion engine downstream from the compressors (12, 22), as seen in the inlet air flow direction, at the junction point (40) between the air flows from the first and second compressors (12 and 22 respectively) incorporates a flow-influencing device (41) which opposes the possibility that compressed air from whichever of the compressors is supplying combustion air at the higher pressure might prevent compressed air from that which is supplying compressed air at a relatively lower pressure from flowing to the junction point (40).

10. Arrangement according to patent claim 8 or 9, **characterised** in that the combustion engine consists of a V-engine with cylinders arranged in two cylinder groups with the cylinders in each group arranged in a row, which cylinder group rows are set at an angle relative to one another, that the common air distribution pipe (5) is arranged between the cylinder groups and that the exhaust manifolds (3,3') for the respective cylinder groups are arranged externally relative to the cylinder groups arranged in a "V" formation.

## Patentansprüche

1. Verfahren zum Aufladen eines Mehrzylinder-Verbrennungsmotors (1), wobei die Zylinder (2, 2') erste und zweite Zylindergruppen bilden,
wobei der Abgasstrom von der ersten Zylindergruppe eine erste Abgasturbine (11) in einer ersten Auf ladeeinheit (10) antreibt und der Abgasstrom von der zweiten Zylindergruppe eine zweite Abgasturbine (21) in einer zweiten Aufladeeinheit (20) antreibt, und
wobei jede der Aufladeeinheiten (10, 20) einen Kompressor (12 bzw. 22) umfaßt, der durch die entsprechende Abgasturbine (11 bzw. 21) angetrieben wird, und der das Einlaßsystem des Verbrennungsmotors mit Verbrennungsluft unter erhöhtem Druck versorgt, dadurch gekennzeichnet, daß nur der Abgasstrom von einer Zylindergruppe, der durch eine der Abgasturbinen fließt, auf der Grundlage von relevanten erfaßten Motorparametern gesteuert wird, während die andere Abgasturbine eine Vollstromturbine mit fester Geometrie ist, wobei im wesentlichen der ganze Abgasstrom aus der zweiten Zylindergruppe in allen Betriebszuständen durch die zweite Abgasturbine fließt.

2. Verfahren nach Anspruch 1, dadurch gekennzeichnet, daß der Abgasstrom von einer Zylindergruppe, der durch die gesteuerte Abgasturbine fließt, auf der Grundlage von relevanten erfaßten Motorparametern gesteuert wird, indem die Geometrie der Turbine angepaßt wird.

3. Verfahren nach Anspruch 1, dadurch gekennzeichnet, daß der Abgasstrom von einer Zylindergruppe, der durch die gesteuerte Abgasturbine fließt, auf der Grundlage von relevanten erfaßten Motorparametern gesteuert wird, indem es für variierende Teile des Stromes möglich ist, an dieser Turbine vorbeigeleitet zu werden.

4. Verfahren nach Anspruch 1, 2 oder 3, dadurch gekennzeichnet, daß die beiden Zylindergruppen des Verbrennungsmotors jeweils mit Verbrennungsluft aus den Kompressoren sowohl der ersten als auch der zweiten Aufladeeinheit versorgt werden.

5. Anordnung zum Aufladen eines Mehrzylinder-Verbrennungsmotors (1), wobei die Zylinder (2, 2') erste und zweite Zylindergruppen bilden, wobei der Abgasstrom aus den Zylindern (2) der ersten Zylindergruppe in einen ersten Abgasverteiler (3) zu einer Abgasturbine (11) in einer ersten Aufladeeinheit (10) geleitet wird, um eine erste Turbine anzutreiben, und wobei der Abgasstrom aus den Zylindern (2') der zweiten Zylindergruppe in einen zweiten, von dem ersten Abgasverteiler getrennten Abgasverteiler (3') zu einer zweiten Abgasturbine (21) in einer zweiten Aufladeeinheit (20) geleitet wird, um die zweite Turbine anzutreiben, und wobei jede der Auf ladeeinheiten (10, 20) einen Kompressor (12 bzw. 22) umfaßt, der durch die Abgasturbine angetrieben wird, und der das Einlaßsystem des Verbrennungsmotors mit Verbrennungsluft bei erhöhtem Druck versorgt, dadurch gekennzeichnet,
daß die erste Turbine (11) eine Vorrichtung (15, A, B / 15, 16) umfaßt, die über die Turbine auf den Strom einwirkt und durch eine Steuereinheit (30) auf der Grundlage von Sensoren (31, 32, 33) gesteuert wird, die mit der Steuereinheit verbunden sind und Betriebszustände des Verbrennungsmotors erfassen, wobei die aus der ersten Turbine (11) gewonnene Arbeit reguliert werden kann, um den durch die erste Turbine (11) angetriebenen Kompressor (12) zu steuern,
daß ein Einlaß (29) zu der zweiten Turbine (21) mit dem Abgasverteiler (3') der zweiten Zylindergruppe verbunden ist, wobei der Abgasverteiler (3') im wesentlichen das gesamte Abgas von der zweiten Zylindergruppe in den Einlaß (29) der zweiten Turbine leitet,
und daß die zweite Turbine (21) eine im wesentlichen konstante nicht veränderliche Geometrie hat, wodurch der Strömungspfad des Abgases aus der zweiten Zylindergruppe und die volumetrische Expansion dieses Abgases in der zweiten Turbine über den größten Teil des Betriebsbereichs des Verbrennungsmotors unverändert belassen werden.

6. Anordnung nach Anspruch 5, dadurch gekennzeichnet, daß die auf die erste Turbine (11) einwirkende Vorrichtung (15, A, B / 15, 16) aus einer Servovorrichtung besteht, die die Geometrie der ersten Turbine einstellt und durch die Steuereinheit (30) gesteuert wird, so daß der Strömungspfad des Abgases durch die Turbine und/oder ihre volumetrische Expansion auf der Grundlage des Betriebszustands des Verbrennungsmotors gesteuert werden kann.

7. Anordnung nach Anspruch 5, dadurch gekennzeichnet, daß die auf die erste Turbine einwirkende Vorrichtung (15, 16) aus einer Umgehungsleitung (17) besteht, die um die erste Turbine (11) geführt ist und ein Steuerventil (16) umfaßt, das durch die Steuereinheit (30) gesteuert wird, so daß der Anteil von Abgasen aus den Zylindern (2) der ersten Zylindergruppe, der durch die erste Turbine (11) fließt oder die erste Turbine umfließt, auf der Grundlage des Betriebszustands des Verbrennungsmotors gesteuert werden kann.

8. Anordnung nach Anspruch 5, 6 oder 7, dadurch gekennzeichnet, daß das Luftverteilerrohr (5) des Verbrennungsmotors ein den Zylindern (2, 2') beider Zylindergruppen zumindest bei der Verbindung zu den einzelnen Lufteinlässen (6) der Zylinder (2, 2') gemeinsames ist und mit verdichteter Verbrennungsluft aus den Kompressoren (12, 22) beider Aufladeeinheiten versorgt wird.

9. Anordnung nach Anspruch 8, dadurch gekennzeichnet, daß das Einlaßsystem des Verbrennungsmotors in der Strömungsrichtung der Einlaßluft stromabwärts von den Kompressoren (12, 22) an der Stelle (40) des Zusammenlaufens der Luftströmungen aus den ersten und zweiten Kompressoren (12 bzw. 22) eine die Strömung beeinflussende Vorrichtung (41) umfaßt, die der Möglichkeit entgegenwirkt, daß verdichtete Luft aus einem beliebigen der Kompressoren, der Verbrennungsluft mit höherem Druck zuführt, verdichtete Luft von dem Kompressor, der verdichtete Luft mit relativ niedrigem Druck zuführt, davon abhält, zu der Stelle (40) des Zusammenlaufens zu strömen.

10. Anordnung nach Anspruch 8 oder 9, dadurch gekennzeichnet, daß der Verbrennungsmotor aus einem V-Motor mit in zwei Zylindergruppen angeordneten Zylindern besteht, wobei die Zylinder in jeder Gruppe in einer Reihe angeordnet sind, und wobei die Zylindergruppenreihen in einem Winkel zueinander angeordnet sind, daß das gemeinsame Luftverteilerrohr (5) zwischen den Zylindergruppen angeordnet ist, und daß die Auslaßverteiler (3, 3') der betreffenden Zylindergruppen bezüglich der Zylindergruppen außerhalb in einer V-Struktur angeordnet sind.

## Revendications

1. Procédé pour suralimenter un moteur à combustion interne à plusieurs cylindres (1) de sorte que les cylindres (2, 2') forment un premier et un second groupe de cylindres, de sorte que le flux d'échappement provenant du premier groupe de cylindres entraîne une première turbine d'échappement (11) d'une première unité de suralimentation (10) et le flux d'échappement provenant du second groupe de cylindres entraîne une seconde turbine d'échappement (21) d'une seconde unité de suralimentation (20), et de sorte que chacune des unités de suralimentation (10, 20) comporte un compresseur (12 ou 22 respectivement) qui est entraîné par la turbine d'échappement respective (11 ou 21 respectivement) et qui alimente le système d'entrée du moteur à combustion à l'aide d'air de combustion sous une pression accrue, caractérisé en ce que seul le flux d'échappement provenant d'un groupe de cylindres, qui passe à travers une des turbines d'échappement, est commandé sur la base des paramètres de moteur concernés détectés, alors que l'autre turbine d'échappement est une turbine à passage total ayant une géométrie fixe de sorte que pratiquement la totalité du flux d'échappement provenant du second groupe de cylindres, dans tous les états de fonctionnement, passe à travers la seconde turbine d'échappement.

2. Procédé selon la revendication 1, caractérisé en ce que le flux d'échappement provenant d'un groupe de cylindres, qui passe à travers la turbine d'échappement commandée, est commandé sur la base des paramètres de moteur concernés détectés en ajustant la géométrie de la turbine.

3. Procédé selon la revendication 1, caractérisé en ce que le flux d'échappement provenant d'un groupe de cylindres, qui passe à travers la turbine d'échappement commandée, est commandé sur la base des paramètres de moteur concernés détectés du fait qu'il est possible de faire varier les proportions du flux à amener à cette turbine.

4. Procédé selon la revendication 1, 2 ou 3, caractérisé en ce que les deux groupes de cylindres du moteur à combustion sont chacun alimentés en air de combustion provenant des compresseurs des deux première et seconde unités de suralimentation.

5. Agencement pour suralimenter un moteur à combustion à plusieurs cylindres (1) de sorte que les cylindres (2, 2') forment un premier et un second groupe de cylindres, de sorte que le flux d'échappement provenant des cylindres (2) du premier groupe de cylindres est amené dans un premier collecteur d'échappement (3) vers une première turbine d'échappement (11) d'une première unité de suralimentation (10) afin d'entraîner une première turbine et de sorte que le flux d'échappement provenant des cylindres (2') du second groupe de cylindres est amené dans un second collecteur d'échappement (3'), séparé du premier collecteur d'échappement, vers une seconde turbine d'échappement (21) d'une seconde unité de suralimentation (20) afin d'entraîner la seconde turbine, et de sorte que chacune des unités de suralimentation (10, 20) comporte un compresseur (12 ou 22 respectivement) qui est entraîné par la turbine d'échappement et qui alimente le système d'admission du moteur à combustion en air de combustion sous une pression accrue, caractérisé en ce que la première turbine (11) comporte un dispositif (15, A, B/15, 16) qui agit sur le flux traversant la turbine et est commandé par une unité de commande (30) sur la base de détecteurs (31, 32, 33) qui sont associés à l'unité de commande et détectent des états de fonctionnement du moteur à combustion, de sorte que le travail extrait de la première turbine (11) peut être ajusté afin de commander le compresseur (12) entraîné par la première turbine (11), qu'une entrée (29) vers la seconde turbine (21) est reliée au collecteur d'échappement (3') du second groupe de cylindres, lequel collecteur d'échappement (3') envoie pratiquement tous les gaz d'échappement provenant du second groupe de cylindres vers l'entrée (29) de la seconde turbine, et en ce que la seconde turbine (21) a une géométrie sensiblement constante, ne pouvant être modifiée, de sorte que le trajet d'écoulement des gaz d'échappement provenant du second groupe de cylindres et la dilatation volumétrique de ces gaz d'échappement dans la seconde turbine sont maintenus constants sur la majeure partie de la plage de fonctionnement du moteur à combustion.

6. Agencement selon la revendication 5, caractérisé en ce que le dispositif (15, A, B/15, 16) agissant sur la première turbine (11) est constitué d'un dispositif d'asservissement qui ajuste la géométrie de la première turbine et qui est commandé par l'unité de commande (30) de sorte que le trajet d'écoulement des gaz d'échappement à travers la turbine et/ou leur dilatation volumétrique peuvent être commandés sur la base de l'état de fonctionnement du moteur à combustion.

7. Agencement selon la revendication 5, caractérisé en ce que le dispositif (15, 16) agissant sur la première turbine est constitué d'un conduit de dérivation (17) qui contourne la première turbine (11) et qui comporte une soupape de commande (16) commandée par l'unité de commande (30) de sorte que la proportion de gaz d'échappement provenant des cylindres (2) du premier groupe qui passe à travers la première turbine (11) ou contourne la première turbine peut être commandée sur la base de l'état de fonctionnement du moteur à combustion.

8. Agencement selon la revendication 5, 6 ou 7, caractérisé en ce que le tuyau de distribution d'air (5) du moteur à combustion interne est commun pour les cylindres (2, 2') des deux groupes de cylindres au moins au niveau de la connexion des entrées d'air individuelles (6) des cylindres (2, 2') et est alimenté en air de combustion comprimé provenant des compresseurs (12, 22) des deux unités de suralimentation.

9. Agencement selon la revendication 8, caractérisé en ce que le système d'entrée du moteur à combustion en aval des compresseurs (12, 22), lorsqu'on regarde dans la direction du flux d'air d'entrée, au niveau du point de jonction (40) entre les flux d'air provenant des premier et second compresseurs (12 et 22 respectivement) comporte un dispositif influençant l'écoulement (41) qui s'oppose à la possibilité que de l'air comprimé provenant de l'un quelconque des compresseurs qui alimente de l'air de combustion à la pression plus élevée puisse empêcher de l'air comprimé provenant de celui qui envoie de l'air comprimé à une pression relativement plus faible de s'écouler vers le point de jonction (40).

10. Agencement selon la revendication 8 ou 9, caractérisé en ce que le moteur à combustion est constitué d'un moteur en V ayant des cylindres agencés en deux groupes de cylindres, les cylindres de chaque groupe étant agencés dans une ligne, lesquelles lignes de groupe de cylindres sont établies en faisant un angle l'une par rapport à l'autre, de sorte que le tuyau commun de distribution d'air (5) est agencé entre les groupes de cylindres et que les collecteurs d'échappement (3, 3') des groupes de cylindres respectifs sont agencés extérieurement par rapport aux groupes de cylindres agencés dans la formation en V.
